# FASCICULE DE BREVET EUROPEEN

(11) **EP 2 516 556 B1**
(45) Date de publication et mention de la délivrance du brevet: **29.05.2019**
(21) Numéro de dépôt: 10813001.4
(22) Date de dépôt: 22.12.2010
(51) Int. Cl.: C09C 1/02, C09C 1/36, C09C 1/40, C09C 3/04, B02C 23/14, B02C 23/06

(54) **UTILISATION DE GLYCEROL COMME AGENT AMELIORANT LE CARACTERE AUTODISPERSANT D'UNE MATIERE MINERALE DESTINEE A UNE COMPOSITION AQUEUSE**
VERWENDUNG VON GLYCERIN ALS MITTEL ZUR VERBESSERUNG DER SELBSTDISPERGIERENDEN EIGENSCHAFTEN EINES MINERALMATERIALS ALS ZUGABE ZU EINER WÄSSRIGEN ZUSAMMENSETZUNG
USE OF GLYCEROL AS AN AGENT TO IMPROVE THE SELF-DISPERSING PROPERTIES OF A MINERAL MATERIAL TO BE ADDED TO AN AQUEOUS COMPOSITION

(30) Priorité: 24.12.2009 FR 0906350; 11.01.2010 US 335683 P
(43) Date de publication de la demande: 31.10.2012
(73) Titulaire: Omya International AG, 4665 Oftringen (CH)
(72) Inventeur: GUILLOT, Murielle, F-69300 Caluire et Cuire (FR); RUHLMANN, Denis, F-69730 Genay (FR); BURI, Matthias, CH-4852 Rothrist (CH)
(74) Mandataire: Plougmann Vingtoft a/s
(86) Numéro de dépôt international: PCT/IB2010/003327
(87) Numéro de publication internationale: WO 2011/077232

(56) Documents cités:
- WO-A1-2006/100510
- WO-A2-2007/109328
- FR-A1- 2 896 171
- PARAMASIVAM R ET AL: "EFFECTS OF THE PHYSICAL PROPERTIES OF LIQUID ADDITIVES ON DRY GRINDING", POWDER TECHNOLOGY, ELSEVIER SEQUOIA, LAUSANNE, CH LNKD- DOI:10.1016/0032-5910(92)85052-W, vol. 70, no. 1, 1 janvier 1992 (1992-01-01), pages 43-50, XP000319358, ISSN: 0032-5910
- H. TAKAHASHI: "wet grinding on kaolin minerals", BULLETIN OF THE CHEMICAL SOCIETY OF JAPAN, vol. 32, no. 4, 1959, pages 381-387, XP002583734,

## Description

La présente invention décrit une solution technique pour faciliter la dispersion de certaines matières minérales (dont le carbonate de calcium naturel) initialement broyées à sec et destinée à être mise en oeuvre dans une composition aqueuse, telle que notamment une suspension aqueuse, une peinture ou une sauce de couchage.

Cette solution repose sur la mise en oeuvre, pendant ladite étape de broyage à sec, de formulations contenant du glycérol et/ou des poly-glycérols. Elle s'inscrit donc dans les concepts de « chimie verte » et de « développement durable », le glycérol étant une ressource renouvelable, non issue d'une énergie fossile. Outre la facilité de mise en dispersion dans l'eau, la solution proposée apporte une réduction notable de la mousse au cours de la mise en dispersion dans l'eau de la matière minérale, ce qui est crucial dans des applications telles que les peintures aqueuses et le couchage papetier.

L'industrie minéralière est aujourd'hui grande consommatrice de produits chimiques. Ceux-ci sont utilisés dans les différentes étapes de transformation / modification / traitement que subissent les matières minérales. Le broyage à sec des matières minérales, dont le carbonate de calcium naturel, constitue l'une de ces étapes.

Ce broyage est réalisé en présence d'agents dits « d'aide au broyage », dont la fonction est de faciliter l'action mécanique du broyage telle que décrite ci-dessus. Ils sont présentés de manière très générale dans les documents « Calcium Carbonate » (Birkhâuser Verlag, 2001) et « Beitrag zur Aufklärung der Wirkungsweise von Mahlhilfsmitteln » (Freiberger Forschungshefte, VEB Deutscher Verlag für Grundstoffindustrie, Leipzig, Germany, 1975).

L'art antérieur est particulièrement riche au sujet de tels additifs, qu'on peut classer en 3 catégories : les acides faibles de Brönstedt, les bases faibles de Brönstedt et les bases de Lewis. Le premier groupe dédié aux acides faibles de Brönstedt, contient notamment les acides formique, acétique, lactique, lignitique, adipique, lactique, les acides gras et en particulier les acides palmitique et stéarique, mais aussi certains sels de ces acides comme les sels de lignine sulfonate. On en trouve des illustrations dans les documents WO 2005 / 063399 et FR 2 203 670.

Le deuxième groupe est constitué par les bases faibles de Brönstedt ; il inclut notamment des alcanolamines, dont la TIPA (tri isopropanol amine) et la TEA (tri éthanol amine) bien connues de l'homme du métier. On pourra à cet égard se reporter aux documents EP 0 510 890 et GB 2 179 268.

Les bases de Lewis constituent le troisième groupe d'agents d'aide au broyage à sec, et contiennent des alcools. Il s'agit de l'éthylène glycol, du diéthylène glycol, du triéthylène glycol, du propylène glycol et du dipropylène glycol. Les documents WO 2002 / 081 573 et US 2003 / 019 399 décrivent par exemple l'usage de diéthylène glycol comme agent d'aide au broyage à sec dans leur tableau 1. Le document WO 2005 / 071 003 fait référence à un alcool polyhydrique, correspondant à l'éthylène glycol. Le document WO 2005 / 026 252 décrit un agent d'aide au broyage à sec pouvant être une triéthanolamine, un polypropylène glycol ou un éthylène glycol.

Force est de reconnaître qu'aujourd'hui encore, ces produits à base de glycol sont les plus utilisés pour le broyage à sec du carbonate de calcium naturel, dont le propylène glycol (ou monopropylène glycol) est le plus répandu. Ces additifs sont en effet réputés pour leur efficacité à faciliter les phénomènes de broyage, et pour leur faible coût.

Toutefois, de tels produits ne sont pas exempts de composés organiques volatils (COV). Par voie de conséquence, le carbonate de calcium broyé avec ces additifs est lui-même porteur de COV, une partie de l'agent d'aide au broyage demeurant fixée / absorbée à la surface de la particule minérale. Cette teneur en COV constitue une barrière à la mise en oeuvre de tels minéraux dans des applications où la réglementation ne tolère plus aucun composé organique volatil. C'est notamment le cas de nombreuses applications en phase aqueuse, comme les peintures, où les Directives Européennes 1999/13/CE (Solvent Emission Directive) et 2004/42/CE (Limitation of VOC emissions related to the use of solvents in décorative paints) limitent spécifiquement les émissions de COV liées aux fabrications et utilisations de peintures.

A cette exigence environnementale s'ajoute une contrainte technique : la recherche d'un caractère autodispersant dans une composition aqueuse pour la matière minérale concernée. Concrètement, ceci signifie que ladite matière minérale, après avoir été broyée, est destinée dans certains cas à entrer dans la composition d'une formulation aqueuse ; elle doit donc être mise en dispersion dans l'eau. C'est par exemple le cas des peintures aqueuses, ou des sauces de couchage papetières, qui peuvent incorporer des carbonates de calcium naturels résultant d'une étape de broyage à sec.

Ce caractère dit autodispersant est d'autant plus marqué qu'on observe, une fois ladite matière minérale introduite dans une composition aqueuse :
- à la fois une viscosité la plus basse possible, mesurée immédiatement après l'opération d'introduction dans l'eau et de mélange, ce qui caractérise un bon état de dispersion initial,
- et une évolution de la viscosité au cours du temps la plus réduite possible, ce qui traduit une bonne stabilité rhéologique de la composition aqueuse ainsi fabriquée.

On retrouve une telle exigence au niveau de toutes les applications en milieu aqueux de la matière minérale concernée : c'est par exemple le cas des suspensions aqueuses, des peintures et des sauces de couchage papetières. A cette exigence s'ajoute la nécessité de limiter le phénomène de mousse, celle-ci apparaissant au cours de la mise en dispersion dans l'eau de la matière minérale broyée, notamment sous l'effet de l'agitation du milieu. Outre son aspect inesthétique, cette mousse est à l'origine de problème de stabilité et de séparation de phases, notamment dans des peintures aqueuses et des sauces de couchage papetières, incorporant des carbonates de calcium issus d'une étape de broyage à sec.

Aussi, poursuivant ses recherches en vue d'améliorer le caractère autodispersant en milieu aqueux de matières minérales issues d'une étape de broyage à sec, la Demanderesse a mis au point l'utilisation de formulations contenant du glycérol et/ou des poly-glycérols en tant qu'agent de broyage à sec desdites matières minérales.

De manière surprenante, ces formulations permettent d'améliorer le caractère autodispersant desdites matières minérales une fois introduites dans une composition aqueuse. Ceci signifie que, par rapport à une composition incorporant la même matière minérale broyée à sec avec du monopropylène glycol ou du polyéthylène glycol, on diminue sa viscosité immédiate et on améliore la stabilité de cette viscosité dans le temps. De plus, on diminue sensiblement la quantité de mousse résultant de l'opération de mise en suspension dans l'eau.

La Demanderesse indique qu'elle a connaissance du document WO 2007 / 138410 qui propose de mettre en oeuvre des polyalkylène glycols de bas poids moléculaire comme agents de broyage à sec du carbonate de calcium : ces produits sont présentés comme efficaces pour broyer à sec un carbonate de calcium, et exempts de COV. Ceci étant, lesdits polyalkylène glycols ne sont pas issus de matières premières renouvelables : leur prix, indexé sur celui du baril de brut, est aujourd'hui très élevé.

Au sujet du glycérol utilisé comme agent d'aide au broyage à sec, la Demanderesse signale qu'elle connaît les documents WO 2006 / 132 762 et WO 2007 / 109 328. Le glycérol est un produit issu de la transformation d'huiles végétales ou animales (saponification, trans-esterification et synthèse d'acide gras). Il s'agit d'une ressource renouvelable, naturelle et disponible en grande quantité. Elle représente une alternative sans COV, tout à fait avantageuse d'un point de vue environnemental et de la préservation de nos ressources naturelles, ce qui n'est notamment pas permis avec les polyéthylène-glycols (PEG) tous issus de voie de synthèse.

Toutefois, ces documents centrés sur le broyage à sec du ciment ne contiennent aucun exemple, ne concernent pas le problème du caractère autodispersant d'une matière minérale, et ne visent aucunement les peintures ou encore les sauces de couchage papetières. Le glycérol est connu comme additif de broyage, tel que décrit dans la thèse intitulée « Compréhension des mécanismes physico-chimiques intervenant lors du broyage à sec du carbonate de calcium en présence d'agent de broyage » de Mathieu Skrzypczak (Ecole Centrale de Lyon, 2009). Or, document ne fait aucune référence au caractère autodispersant de la matière broyée ainsi obtenue dans une composition aqueuse.

Le document « Effects of the physical grinding properties of liquid additives on dry grinding » par Paramavisam et al. dans Powder Technology, Vol 70, No. 1, 1992 décrit un procédé de broyage à sec de calcite, en présence de différents aides au broyage parmi lesquels un mélange de glycérol et un autre additif est cité sans donner aucune information sur l'effet qu'ils peuvent avoir sur la nature auto-dispersante des particules.

Enfin, la Demanderesse connaît la demande française non encore publiée et portant le numéro de dépôt FR 09 58685 : celle-ci porte sur l'utilisation de glycérol dans un procédé de broyage de matières minérales, avec la fonction très particulière d'augmenter la capacité de broyage et de diminuer la consommation d'énergie de broyage spécifique (énergie de broyage proprement dit, mais aussi énergie de classification) en vue d'obtenir une granulométrie donnée. Ce document ne fait aucune référence au caractère autodispersant de la matière broyée ainsi obtenue dans une composition aqueuse.

La Demanderesse tient également à mentionner la demande de brevet EP 09 015 129.1 qui définit un procédé de classification de matière minérale mettant en oeuvre un additif d'aide à la classification comprenant du glycérol et / ou au moins un poly-glycérol permettant d'augmenter l'efficacité de classification à air ou impliquant une énergie de classification spécifique réduite par rapport à une classification à air sans additif, permettant la mise en oeuvre du produit classifié dans divers environnements, tel que par exemple les environnements hydrophiles. Ce document ne fait aucune référence au caractère autodispersant de la matière broyée ainsi obtenue dans une composition aqueuse.

Aussi, cherchant à améliorer le caractère autodispersant d'une matière minérale dans une composition aqueuse, tout en réduisant le phénomène de mousse induite, étant entendu que ladite matière minérale est issue d'une étape de broyage à sec, la Demanderesse a mis au point l'utilisation de formulations contenant du glycérol et/ou des poly-glycérols pendant l'étape de broyage à sec de ladite matière minérale.

L'invention consiste donc en l'utilisation pendant une étape de broyage à sec d'une matière minérale, de formulations contenant du glycérol et/ou des poly-glycérols, comme agent améliorant le caractère autodispersant de ladite matière minérale dans une composition aqueuse.

Il est bien entendu que le caractère autodispersant s'entend « par rapport à la même composition aqueuse, incorporant la même matière minérale, issue de la même étape de broyage à sec, mais en présence d'un agent d'aide au broyage de l'art antérieur ». Comme déjà expliqué, le caractère autodispersant est évalué, pour la composition aqueuse dans laquelle est introduite la matière minérale broyée à sec, à travers une mesure de viscosité immédiate (ou après 24 heures) et l'évolution de cette viscosité au cours du temps.

Un premier objet de l'invention consiste donc en l'utilisation, comme agent améliorant le caractère auto-dispersant dans l'eau d'une matière minérale choisie parmi les dolomies, le talc, le dioxyde de titane, l'alumine, le kaolin et le carbonate de calcium, de formulations caractérisées :
en ce qu'elles :
   (i) consistent en glycérol, sous forme aqueuse ou pure, ou
   (ii) consistent en en glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieure au rayon modal de la matière minérale, un ou plusieurs poly-glycérols, le ou lesdits agents étant sous forme aqueuse ou pure, ou
   (iii) comprennent un ou plusieurs poly-glycérols en absence de glycérol,
et en ce qu'elles sont mises en oeuvre pendant au moins une étape de broyage à sec de ladite matière minérale,
et en ce qu'on met en oeuvre de 100 ppm à 5 000 ppm de glycérol ou de poly-glycérol,par rapport au poids sec de ladite matière minérale.

L'expression sous forme pure signifie que la formulation contenant le produit en question, ne contient aucun autre produit.

Cette utilisation peut être déclinée en 5 variantes, selon la forme et la nature de l'agent d'aide au broyage :
- première variante : du glycérol sous forme pure
- deuxième variante : du glycérol en formulation aqueuse
- troisième variante : du glycérol en combinaison avec au moins un des composés énoncé au point (ii), sous forme aqueuse ou pure
- quatrième variante : avec un ou plusieurs poly-glycérols
- cinquième variante : un ou plusieurs poly-glycérols sous forme pure
- sixième variante : un ou plusieurs poly-glycérols en formulation aqueuse.

Dans une première variante, cette utilisation est aussi caractérisée en ce que lesdites formulations consistent en du glycérol sous forme pure.

Dans une deuxième variante, cette utilisation est aussi caractérisée en ce que lesdites formulations consistent en eau et glycérol.

Selon cette deuxième variante, cette utilisation est aussi caractérisée en ce que lesdites formulations contiennent de 25 % à 95 %, préférentiellement de 45 % à 90 %, très préférentiellement de 75 % à 85 % en poids de glycérol par rapport à leur poids total, le complément étant constitué par l'eau.

Dans une troisième variante, cette utilisation est aussi caractérisée en ce que lesdites formulations consistent en glycérol avec un ou plusieurs desdits agents, sous forme aqueuse ou pure.

Selon cette troisième variante, cette utilisation est aussi caractérisée en ce que ledit acide inorganique est un acide phosphorique.

Selon cette troisième variante, cette utilisation est aussi caractérisée en ce que ledit sel d'acide inorganique est un sel mono-, di- ou tri-alcalin, et préférentiellement est un sel de cation du Groupe I ou II du Tableau Périodique des Eléments.

Selon cette troisième variante, cette utilisation est aussi caractérisée en ce que ledit sel d'acide formique ou citrique est un sel mono-, di- ou tri-alcalin, et préférentiellement est un sel de cation du Groupe I ou II du Tableau Périodique des Eléments.

Selon cette troisième variante, cette utilisation est aussi caractérisée en ce que ledit polyacide organique est de formule COOH-(CH₂)ₙ-COOH, ou n est un entier de valeur entre 0 et 7, inclusif, ou est un sel mono- ou di-alcalin du polyacide organique de formule COOH-(CH₂)n-COOH, ou n est égal à un entier de valeur entre 0 et 7 inclusif, ou est un polyacide organique polymérique d'un ou plusieurs des monomères suivants, sous forme acide ou partiellement ou entièrement neutralisé avec un ou plusieurs cations du Groupe I ou II du Tableau Périodique des Eléments: acrylique, méthacrylique, maléique ou itaconique, et préférentiellement est un acide oxalique, un acide pimélique, ou un acide adipique.

Selon cette troisième variante, cette utilisation est aussi caractérisée en ce que ladite alcanolamine est choisie parmi le 2-amino-2-méthyle-1-propanol, le 2-amino-2-ethyle-1,3-propanediol, la tri-éthanolamine, la N-butyldiéthanolamine et la tri-iso-propanolamine, neutralisées ou non, et est préférentiellement choisie parmi leurs formes neutralisées au moyen d'un sel d'acide formique ou citrique ou d'un sel de polyacide organique.

Selon cette troisième variante, cette utilisation est aussi caractérisée en ce que ledit polymère polyalkylène glycol est un polyéthylène glycol, un polypropylène glycol, ou un copolymère éthylène-propylène glycol, aléatoire ou bloc.

Selon cette troisième variante, cette utilisation est aussi caractérisée en ce que ledit glucide ayant une racine moyenne au carré du rayon de giration dudit glucide égale ou inférieure au rayon modal de la matière minérale est le glucose, le fructose, le sucrose, l'amidon ou la cellulose, et préférentiellement est le sucrose.

Selon cette troisième variante, cette utilisation est aussi caractérisée en ce que le ou les poly-glycérols sont choisis parmi le di-glycérol, tri- glycérol, tétra- glycérol, penta-glycérol, hexa-glycérol, hepta-glycérol, octa-glycérol , nona-glycérol et déca-glycérol et leurs mélanges et préférentiellement parmi le di- et tri-glycérol.

Selon cette troisième variante, cette utilisation est aussi caractérisée en ce que lesdites formulations contiennent de 20 % à 95 % en poids de glycérol, de 1 % à 50 % en poids dudit agent et de 0 % à 65 % en poids d'eau, préférentiellement de 30 % à 90 % en poids de glycérol, de 10 % à 45 % en poids dudit agent et de 0 % à 60 % en poids d'eau, très préférentiellement de 35 % à 75 % en poids de glycérol, de 30 % à 40 % en poids dudit agent et de 5 % à 50 % en poids d'eau par rapport à leur poids total, la somme des pourcentages en poids de glycérol, dudit agent et d'eau étant à chaque fois égale à 100 %.

Dans une quatrième variante, cette utilisation est caractérisée en ce que lesdites formulations comprennent un ou plusieurs poly-glycérols en absence de glycérol.

Ce ou ces poly-glycérols sont préférentiellement choisis parmi le di-glycérol, tri-glycérol, tétra- glycérol, penta-glycérol, hexa-glycérol, hepta-glycérol, octa-glycérol, nona-glycérol et déca-glycérol et leurs mélanges et plus préférentiellement parmi le di- et tri-glycérol.

Selon une cinquième variante, cette utilisation est caractérisée en ce que lesdites formulations consistent en un ou plusieurs poly-glycérols sous forme pure.

Selon cette cinquième variante, cette utilisation est aussi caractérisée en ce que le ou les poly-glycérols sont choisis parmi le di-glycérol, tri- glycérol, tétra- glycérol, penta-glycérol, hexa-glycérol, hepta-glycérol, octa-glycérol , nona-glycérol et déca-glycérol et leurs mélanges et préférentiellement parmi le di- et tri-glycérol.

Selon une sixième variante, cette utilisation est aussi caractérisée en ce que lesdites formulations consistent en eau et un ou plusieurs poly-glycérols.

Selon cette sixième variante, cette utilisation est aussi caractérisée en ce que lesdites formulations contiennent de 25 % à 95 %, préférentiellement de 45 % à 90 %, très préférentiellement de 75 % à 85 % en poids de poly-glycérols par rapport à leur poids total, le complément étant constitué par l'eau.

Selon cette sixième variante, cette utilisation est aussi caractérisée en ce que le ou les poly-glycérols sont choisis parmi le di-glycérol, tri- glycérol, tétra- glycérol, penta-glycérol, hexa-glycérol, hepta-glycérol, octa-glycérol , nona-glycérol et déca-glycérol et leurs mélanges et préférentiellement parmi le di- et tri-glycérol.

De manière générale, cette utilisation est aussi caractérisée en ce qu'on met en oeuvre, préférentiellement de 500 à 3 000 ppm de glycérol ou poly-glycérol, par rapport au poids sec de ladite matière minérale.

De manière générale, cette utilisation est aussi caractérisée en ce qu'on met en oeuvre entre 0,1 et 1 mg, et préférentiellement entre 0,2 et 0,6 mg, équivalent sec total dudit glycérol ou poly-glycérol et tout éventuel agent par m² de matière minérale.

De manière générale, cette utilisation est aussi caractérisée en ce que ladite matière minérale est broyée jusqu'à un diamètre moyen, mesuré par un Sedigraph™ 5100, compris entre 0,5 et 10 µm, préférentiellement entre 1 µm et 5 µm.

De manière générale, cette utilisation est aussi caractérisée en ce que ladite matière minérale est broyée jusqu'à obtenir un pourcentage en poids de particules ayant un diamètre inférieur à 2 µm, mesuré par un Sedigraph™ 5100, compris entre 20 % et 90 %, préférentiellement entre 30 % et 60 %.

De manière générale, cette utilisation est aussi caractérisée en ce que ladite matière minérale est un carbonate de calcium naturel.

Les exemples qui suivent permettront de mieux comprendre l'invention, sans toutefois en limiter la portée.

### EXEMPLES

### Exemple 1

Cet exemple illustre le broyage à sec d'un carbonate de calcium naturel qui est un marbre de Carrare. Le broyage est réalisé au moyen d'une installation équipée d'un broyeur à boulet et d'un classificateur.

La distribution de tailles des particules du carbonate de calcium initial alimentant le broyeur est donnée dans le tableau 1.

**Tableau 1**

| **Diamètre des particules (mm)** | **% massique** |
|---|---|
| 4 - 2,5 | 7,25 |
| 2,5 - 1,6 | 9,73 |
| 1,6 - 0,8 | 11,44 |
| 0,8 - 0,5 | 5,57 |
| 0,5 - 0,2 | 23,73 |
| 0,2 - 0,1 | 23,18 |
| < 0,1 | 19,1 |

Le marbre de Carrare a été introduit dans un broyeur à boulets de 5,7 m³ utilisant 8 tonnes de billes de broyage en fer Cylpeb™, en forme de cylindres, ayant un diamètre moyen de 16 mm, en vue d'obtenir un matériau broyé :
- ayant un diamètre médian inférieur ou égal à 1,8 µm,
- dont 55 % en poids des particules ont un diamètre inférieur ou égal à 2 µm.

Le broyage à sec est réalisé de manière continue.

En sortie de la chambre de broyage, le matériau broyé est mené jusqu'à un classificateur de type SELEX™ 6S. Sa vitesse de rotation et son débit d'air sont respectivement réglés à 5200 tours/min et 6000 m³/h de façon à sélectionner la fraction de particules ayant un diamètre moyen inférieur ou égal à une valeur donnée et qui constituera le produit fini ; la fraction de particules restantes ayant un diamètre moyen supérieur à cette valeur est réintroduite dans le broyeur à boulets.

Le broyage est réalisé de telle manière à ce que le débit d'alimentation du sélecteur soit toujours égal à 4 tonnes/h et à ce que la quantité de produit frais injecté dans le broyeur à boulets corresponde à la quantité de produit sélectionné quittant le système.

Les agents d'aide au broyage à sec ont été introduits dans le système de broyage au niveau du point d'introduction du matériau frais de manière à maintenir une quantité constante d'agent d'aide au broyage par rapport au matériau frais introduit à broyer.

**Tableau 2**

| **Essai n°** | **1** | **2** | **3** |
|---|---|---|---|
| Type d'agent d'aide au broyage | MPG | PEG | Glycérol |
| Art Antérieur (AA) / Invention (IN) | AA | AA | IN |
| % de particules de diamètre < 2µm | 57 | 57 | 57 |
| % de particules de diamètre < 1 µm | 22 | 21 | 23 |
| d50 (µm) | 1,8 | 1,8 | 1,7 |
| Surface spécifique BET (m²/g) | 6,3 | 6,9 | 6,9 |

Les agents d'aide au broyage référencés MPG consistent en solution aqueuse contenant 75 % (massique) de monopropylène glycol et ont été obtenus auprès de la société FLUKA™.

Les agents d'aide au broyage référencés PEG consistent en solution aqueuse contenant 75 % (massique) de polyéthylène glycol de masse moléculaire en poids égale à 600 g/mole et ont été obtenus auprès de la société FLUKA™.

Glycérol désigne une solution aqueuse contenant 75 % (massique) de glycérol.

Chacun des essais met en oeuvre 2000 ppm de produit actif (soit 2667 ppm de chaque solution aqueuse).

Les carbonates de calcium issus des essais n° 1 à 3 vont ensuite être testés dans les exemples 2 à 4, en vue de quantifier leur aptitude à réduire le phénomène de mousse au cours de leur mise en dispersion dans l'eau, et leur capacité à être dispersé facilement dans une formulation aqueuse.

### Exemple 2

Cet exemple illustre l'effet de l'agent de broyage à sec utilisé, sur la quantité de mousse formée lorsqu'on remet en dispersion dans l'eau le carbonate de calcium issu dudit broyage.

Pour ce faire, on prépare à l'aide d'eau distillée une suspension aqueuse à 40 % en poids sec de carbonate de calcium. 600 ml de cette suspension sont introduits dans l'appareillage dit « machine à mousse » composé d'une pompe centrifuge à travers laquelle la suspension circule en boucle à un débit de 50 l/min., d'une colonne verticale graduée en verre de 750 ml et de 20 cm de haut pour introduire la suspension dans la pompe et d'une arrivée d'air effectuée à partir d'un tuyau installé dans le circuit de recirculation de la suspension. Cette circulation de la suspension est réalisée pendant 10 minutes sous un bullage d'air continu à un débit constant de 230-235 ml/min.

Au bout de ces 10 minutes, la hauteur de mousse est directement lue sur la graduation de la colonne.

**Tableau 3**

| **Essai n°** | **1** | **2** | **3** |
|---|---|---|---|
| Type d'agent d'aide au broyage | MPG | PEG | Glycérol |
| Art Antérieur (AA) / Invention (IN) | AA | AA | IN |
| Hauteur de mousse (cm) | 7 | > 20 | 3 |

Ces résultats démontrent que le carbonate de calcium broyé à sec en présence de glycérol permet de réduire notablement la quantité de mousse lorsque ledit carbonate est mis en dispersion dans l'eau.

### Exemple 3

Cet exemple illustre la fabrication de peintures dont la formulation met en oeuvre un des 3 carbonates de calcium broyés à sec selon l'exemple 1. Dans chacun des essais n° 1 ter à 3 ter, on réalise une peinture mate en phase aqueuse par mélange sous agitation des différents constituants, dans les proportions en grammes telles qu'indiquées dans le tableau 4.

**Tableau 4**

| **Essai n°** | **1 ter** | **2 ter** | **3 ter** |
|---|---|---|---|
| **Art Antérieur (AA) / Invention (IN)** | **AA** | **AA** | **IN** |
| Eau | 292,0 | 292,0 | 292,0 |
| Ammoniaque (solution à 31 %) | 2,0 | 2,0 | 2,0 |
| Ecodis™ P90 (solution à 40%) | 4,0 | 4,0 | 4,0 |
| Mergal™ K6N | 2,0 | 2,0 | 2,0 |
| Byk™ 034 | 2,0 | 2,0 | 2,0 |
| TiO2 RL68 | 41,0 | 41,0 | 41,0 |
| Durcal™ 2 | 328,0 | 328,0 | 328,0 |
| CaCO3 broyé à sec selon l'essai n°1 | 215,0 | 0 | 0 |
| CaCO3 broyé à sec selon l'essai n°2 | 0 | 215,0 | 0 |
| CaCO3 broyé à sec selon l'essai n°3 | 0 | 0 | 215,0 |
| Acronal™ 290D | 82,0 | 82,0 | 82,0 |
| Monopropylène glycol | 10,0 | 10,0 | 10,0 |
| Texanol™ | 10,0 | 10,0 | 10,0 |
| Rheotech™ 3000 | 12,0 | 12,0 | 12,0 |
| Total (g) | 1000,0 | 1000,0 | 1000,0 |

| | | | |
|---|---|---|---|
| Ecodis™ P90 désigne un épaississant commercialisé par la société COATEX™, Rheotech™ 3000 désigne un épaississant commercialisé par la société COATEX™, Mergal™ K6N désigne un bactéricide commercialisé par la société TROY™, Byk™ 034 désigne un agent antimousse commercialisé par la société BYK™, TiO2 RL68 désigne une poudre de dioxyde de titane commercialisée par la société MILLENIUM™, Durcal™ 2 désigne un carbonate de calcium commercialisé par la société OMYA™, Acronal™ 290 D désigne un liant commercialisé par la société BASF™, Texanol™ désigne un agent de coalescence commercialisé par la société EASTMANN™, | | | |

Pour chacun des essais n° 1 bis à 3 bis, on a déterminé les viscosités Brookfield™ à 10 et 100 tours par minute selon les méthodes bien connues de l'homme du métier.

On a aussi mesuré certaines caractéristiques optiques des peintures obtenues, tel que notamment la blancheur L, le Sous-ton "3 filtres Hunterlab" et le niveau de brillant sous 85°. Les méthodes mises en oeuvre sont notamment décrites dans le document FR 2 872 815. Les résultats figurent dans les tableaux 5 et 6.

**Tableau 5**

| **Viscosités** | | **Essai n°** | | |
|---|---|---|---|---|
| | | **1 ter** | **2 ter** | **3 ter** |
| | | **AA** | **AA** | **IN** |
| Instant t = 0 | *µ* ^{B}₁₀(mPa.s) | 12 400 | 10 000 | 10 700 |
| | *µ* ^{B}₁₀₀ (mPa.s) | 3 400 | 2 800 | 3 100 |
| Instant t = 24 heures | *µ* ^{B}₁₀ (mPa.s) | 14 200 | 11 900 | 11 700 |
| | *µ* ^{B}₁₀₀(mPa.s) | 4 000 | 3 600 | 3 500 |
| Instant t = 7 jours 50°C | *µ* ^{B}₁₀ (mPa.s) | 21 400 | 13 900 | 13 600 |
| | *µ* ^{B}₁₀₀ (mPa.s) | 5 830 | 4 100 | 4 100 |
| Instant t = 1 mois 50°C | *µ* ^{B}₁₀ (mPa.s) | 27 500 | 18 100 | 18 100 |
| | *µ* ^{B}₁₀₀ (mPa.s,) | 7 250 | 5 100 | 5 100 |

| | | | | |
|---|---|---|---|---|
| *µ* ^{B}₁₀(mPa.s) : viscosité Brookfield™ déterminée à 10 tours par minute *µ* ^{B}₁₀₀(mPa.s) : viscosité Brookfield™ déterminée à 100 tours par minute | | | | |

**Tableau 6**

| **Essai n°** | **1 ter** | **2 ter** | **3 ter** |
|---|---|---|---|
| Art Antérieur (AA) / Invention (IN) | AA | AA | IN |
| Blancheur | | | |
| Mesure du "L" | 98,6 | 98,7 | 98,7 |

| Sous-ton "3 filtres Hunterlab" | | | |
|---|---|---|---|
| Valeur de a | 0 | 0,1 | 0,1 |
| Valeur de b | 3,0 | 3,0 | 3,1 |

| Niveau de brillant | | | |
|---|---|---|---|
| 85° | 12,3 | 12,6 | 12,6 |

Par rapport à la référence du marché qui met en oeuvre comme agent de broyage à sec du monopropylène glycol, on est parvenu à améliorer le caractère autodispersant du carbonate de calcium dans une peinture, par mise en oeuvre de la formulation contenant du glycérol. En effet, par rapport à l'essai n° 1 ter, on observe dans l'essai n° 3 ter à la fois une diminution de la viscosité initiale, ce qui traduit un bon état de dispersion initial, et une plus faible dérive de cette viscosité au cours du temps, ce qui traduit une meilleure stabilité. De plus, les propriétés optiques finales ne sont pas altérées.

Par rapport au carbonate de calcium broyé à sec avec du polyéthylène glycol de bas poids moléculaire, on se situe au même niveau de performances, tant sur le plan rhéologique que des propriétés optiques. Le glycérol constitue donc une solution aussi efficace que le polyéthylène glycol de bas poids moléculaire, mais moins coûteuse et surtout, issue d'une ressource renouvelable non alimentaire, naturelle et disponible en grande quantité : elle représente une alternative sans COV, très avantageuse sur le plan environnemental et pour la préservation de nos ressources naturelles, qui s'inscrit parfaitement dans les concepts de « chimie verte » et de « développement durable ».

### Exemple 4

Cet exemple illustre l'aptitude de carbonates de calcium broyés à sec selon l'invention (avec des formulations contenant du glycérol) ou selon l'art antérieur (avec un agent de broyage à sec de l'état de la technique) à se disperser en phase aqueuse, en présence d'un dispersant acrylique.

Pour chacun des essais 1 quatro à 3 quatro, on introduit dans un bécher de 1 litre 500 grammes de carbonate de calcium broyé à sec respectivement selon les essais 1 à 3 à 175 g d'eau de manière à obtenir un extrait sec de 74% en poids.

On ajoute alors dans le milieu une certaine quantité d'un dispersant acrylique (qui est un homopolymère de l'acide acrylique, neutralisé sodium / calcium 70 / 30 % molaire, d'une masse moléculaire en poids égale à 5 500 g/mol), on agite et on mesure la viscosité Brookfield™ à 25°C et à 100 tours / minute.

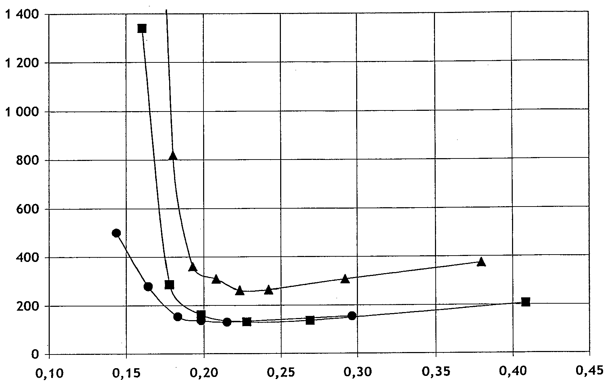

En répétant ces opérations pour des ajouts croissants de dispersant, on peut tracer l'évolution de la viscosité Brookfield™ à 25°C et à 100 tours / minute (mPa.s), en fonction du pourcentage en poids sec de dispersant par rapport au poids sec de carbonate de calcium. Les courbes correspondantes apparaissent sur la figure 1 / 1, avec les symboles suivants :
- triangles noirs pour l'essai n° 1 quatro avec le carbonate broyé à sec en présence de PEG
- carrés noirs pour l'essai n° 2 quatro avec le carbonate broyé à sec en présence de MPG
- ronds noirs pour l'essai n° 3 quatro avec le carbonate broyé à sec en présence de glycérol

La figure 1 / 1 démontre clairement que, à extrait sec constant (74 %), le carbonate de calcium broyé à sec en présence de glycérol est celui qui requiert la plus faible dose de dispersant pour atteindre un niveau de viscosité donné ; en d'autres termes, c'est ce carbonate de calcium qui présente le caractère autodispersant le plus prononcé, lorsqu'on le met en suspension aqueuse en présence d'un dispersant acrylique.

## Revendications

1. Utilisation, comme agent améliorant le caractère auto-dispersant dans l'eau d'une matière minérale choisie parmi les dolomies, le talc, le dioxyde de titane, l'alumine, le kaolin et le carbonate de calcium, de formulations **caractérisées :**
**en ce qu'**elles :
(i) consistent en du glycérol, sous forme aqueuse ou pure, ou
(ii) consistent en du glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieure au rayon modal de la matière minérale, un ou plusieurs poly-glycérols, le ou lesdits agents étant sous forme aqueuse ou pure, ou
(iii) comprennent un ou plusieurs poly-glycérols en absence de glycérol,
**en ce qu'**elles sont mises en oeuvre pendant au moins une étape de broyage à sec de ladite matière minérale,
et **en ce qu'**on met en oeuvre de 100 ppm à 5 000 ppm de glycérol ou de poly-glycérol, par rapport au poids sec de ladite matière minérale.

2. Utilisation selon la revendication 1, **caractérisée en ce que** lesdites formulations consistent en du glycérol sous forme pure.

3. Utilisation selon la revendication 1, **caractérisée en ce que** lesdites formulations consistent en de l'eau et du glycérol.

4. Utilisation selon la revendication 3, **caractérisée en ce que** lesdites formulations contiennent de 25 % à 95 %, préférentiellement de 45 % à 90 %, très préférentiellement de 75 % à 85 % en poids de glycérol par rapport à leur poids total, le complément étant constitué par l'eau.

5. Utilisation selon la revendication 1, **caractérisée en ce que** lesdites formulations consistent en du glycérol avec un ou plusieurs desdits agents, sous forme aqueuse ou pure.

6. Utilisation selon la revendication 5, **caractérisée en ce que** ledit acide inorganique est un acide phosphorique.

7. Utilisation selon la revendication 5, **caractérisée en ce que** ledit sel d'acide inorganique est un sel mono-, di- ou tri-alcalin, et préférentiellement est un sel de cation du Groupe I ou II du Tableau Périodique des Eléments.

8. Utilisation selon la revendication 5, **caractérisée en ce que** ledit sel d'acide formique ou citrique est un sel mono-, di- ou tri-alcalin, et préférentiellement est un sel de cation du Groupe I ou II du Tableau Périodique des Eléments.

9. Utilisation selon la revendication 5, **caractérisée en ce que** ledit polyacide organique est de formule COOH-(CH₂)ₙ-COOH, ou n est un entier de valeur entre 0 et 7, inclusif, ou est un sel mono- ou di-alcalin du polyacide organique de formule COOH-(CH₂)ₙ-COOH, ou n est égal à un entier de valeur entre 0 et 7 inclusif, ou est un polyacide organique polymérique d'un ou plusieurs des monomères suivants, sous forme acide ou partiellement ou entièrement neutralisé avec un ou plusieurs cations du Groupe I ou II du Tableau Périodique des Eléments: acrylique, méthacrylique, maléique ou itaconique, et préférentiellement est un acide oxalique, un acide pimélique, ou un acide adipique.

10. Utilisation selon la revendication 5, **caractérisée en ce que** ladite alcanolamine est choisie parmi le 2-amino-2-méthyle-1-propanol, le 2-amino-2-ethyle-1,3-propanediol, la tri-éthanolamine, la N-butyldiéthanolamine et la tri-iso-propanolamine, neutralisées ou non, et est préférentiellement choisie parmi leurs formes neutralisées au moyen d'un sel d'acide formique ou citrique ou d'un sel de polyacide organique.

11. Utilisation selon la revendication 5, **caractérisée en ce que** ledit polymère polyalkylène glycol est un polyéthylène glycol, un polypropylène glycol, ou un copolymère éthylène-propylène glycol, aléatoire ou bloc.

12. Utilisation selon la revendication 5, **caractérisée en ce que** ledit glucide ayant une racine moyenne au carré du rayon de giration dudit glucide égale ou inférieure au rayon modal de la matière minérale est le glucose, le fructose, le sucrose, l'amidon ou la cellulose, et préférentiellement est le sucrose.

13. Utilisation selon la revendication 5, **caractérisée en ce que** le ou les poly-glycérols sont choisis parmi le di-glycérol, tri- glycérol, tétra- glycérol, penta-glycérol, hexa-glycérol, hepta-glycérol, octa-glycérol, nona-glycérol et déca-glycérol et leurs mélanges et préférentiellement parmi le di- et tri-glycérol.

14. Utilisation selon l'une des revendications 5 à 13, **caractérisée en ce que** lesdites formulations contiennent de 20 % à 95 % en poids de glycérol, de 1 % à 50 % en poids dudit agent et de 0 % à 65 % en poids d'eau, préférentiellement de 30 % à 90 % en poids de glycérol, de 10 % à 45 % en poids dudit agent et de 0 % à 60 % en poids d'eau, très préférentiellement de 35 % à 75 % en poids de glycérol, de 30 % à 40 % en poids dudit agent et de 5 % à 50 % en poids d'eau par rapport à leur poids total, la somme des pourcentages en poids de glycérol, dudit agent et d'eau étant à chaque fois égale à 100 %.

15. Utilisation selon la revendication 1, **caractérisé en ce que** lesdites formulations comprennent un ou plusieurs poly-glycérols en absence de glycérol.

16. Utilisation selon la revendication 15, **caractérisé en ce que** le ou les poly-glycérols sont choisis parmi le di-glycérol, tri- glycérol, tétra- glycérol, penta-glycérol, hexa-glycérol, hepta-glycérol, octa-glycérol, nona-glycérol et déca-glycérol et leurs mélanges et préférentiellement parmi le di- et tri-glycérol.

17. Utilisation selon la revendication 15 ou 16, **caractérisé en ce que** lesdites formulations consistent en un ou plusieurs poly-glycérols sous forme pure.

18. Utilisation selon la revendication 15 ou 16, **caractérisé en ce que** lesdites formulations consistent en de l'eau et un ou plusieurs poly-glycérols.

19. Utilisation selon la revendication 18, **caractérisée en ce que** lesdites formulations contiennent de 25 % à 95 %, préférentiellement de 45 % à 90 %, très préférentiellement de 75 % à 85 % en poids de poly-glycérols par rapport à leur poids total, le complément étant constitué par l'eau.

20. Utilisation selon l'une des revendications 1 à 19, **caractérisée en ce qu'**on met en oeuvre de 500 à 3 000 ppm de glycérol ou poly-glycérol, par rapport au poids sec de ladite matière minérale.

21. Utilisation selon l'une des revendications 1 à 20, **caractérisée en ce qu'**on met en oeuvre entre 0,1 et 1 mg, et préférentiellement entre 0,2 et 0,6 mg, équivalent sec total dudit glycérol ou poly-glycérol et tout éventuel agent par m² de matière minérale.

22. Utilisation selon l'une des revendications 1 à 21, **caractérisée en ce que** ladite matière minérale est broyée jusqu'à un diamètre moyen, mesuré par un Sedigraph™ 5100, compris entre 0,5 et 10 µm, préférentiellement entre 1 µm et 5 µm.

23. Utilisation selon l'une des revendications 1 à 22, **caractérisée en ce que** ladite matière minérale est broyée jusqu'à obtenir un pourcentage en poids de particules ayant un diamètre inférieur à 2 µm, mesuré par un Sedigraph™ 5100, compris entre 20 % et 90 %, préférentiellement entre 30 % et 60 %.

24. Utilisation selon l'une des revendications 1 à 23, **caractérisée en ce que** ladite matière minérale est un carbonate de calcium naturel.

## Patentansprüche

1. Verwendung, als Mittel zur Verbesserung der selbstdispergierenden Eigenschaften in Wasser eines Mineralmaterials, ausgewählt aus Dolomit, Talkum, Titandioxid, Aluminiumoxid, Kaolin und Calciumcarbonat, von Formulierungen, **dadurch gekennzeichnet, dass** sie:
(i) aus Glycerin bestehen, in wässriger oder reiner Form, oder
(ii) aus Glycerin mit einem oder mehreren der folgenden Mittel bestehen: Ethylenglykol, Monopropylenglykol, Triethylenglykol, eine anorganische Säure oder ein anorganisches Säuresalz, Ameisen- oder Zitronensäure oder ein Ameisen- oder Zitronensäuresalz, eine organische Polysäure oder ein organisches Polysäuresalz, ein Alkanolamin, ein Polyethylenimin, ein Polyalkylenglykolpolymer mit einer Gewichtsmolekularmasse zwischen 200 g/mol und 20.000 g/mol, vorzugsweise zwischen 600 g/mol und 6.000 g/mol, ein Kohlenhydrat mit einer durchschnittlichen quadratischen Wurzel des Trägheitsradius gleich oder kleiner als der Modalradius des Mineralmaterials, ein oder mehrere Polyglycerine, wobei das/die Mittel in wässriger oder reiner Form vorliegen, oder
(iii) ein oder mehrere Polyglycerine in Abwesenheit von Glycerin umfassen,
dass sie während mindestens eines Trockenmahlschrittes des Mineralmaterials umgesetzt werden,
und dass von 100 ppm bis 5.000 ppm Glycerin oder Polyglycerin, bezogen auf das Trockengewicht des Mineralmaterials, umgesetzt werden.

2. Verwendung nach Anspruch 1, **dadurch gekennzeichnet, dass** die Formulierungen aus Glycerin in reiner Form bestehen.

3. Verwendung nach Anspruch 1, **dadurch gekennzeichnet, dass** die Formulierungen aus Wasser und Glycerin bestehen.

4. Verwendung nach Anspruch 3, **dadurch gekennzeichnet, dass** die Formulierungen 25 % bis 95 %, vorzugsweise 45 % bis 90 %, sehr bevorzugt 75 % bis 85 % Glycerin, bezogen auf ihr Gesamtgewicht, enthalten, wobei der Rest aus Wasser besteht.

5. Verwendung nach Anspruch 1, **dadurch gekennzeichnet, dass** die Formulierungen aus Glycerin mit einem oder mehreren der Mittel in wässriger oder reiner Form bestehen.

6. Verwendung nach Anspruch 5, **dadurch gekennzeichnet, dass** die anorganische Säure eine Phosphorsäure ist.

7. Verwendung nach Anspruch 5, **dadurch gekennzeichnet, dass** das anorganische Säuresalz ein Mono-, Di- oder Trialkalinsalz ist und vorzugsweise ein Kationensalz der Gruppe I oder II des Periodensystems der Elemente ist.

8. Verwendung nach Anspruch 5, **dadurch gekennzeichnet, dass** das Ameisen- oder Zitronensäuresalz ein Mono-, Di- oder Trialkalinsalz ist und vorzugsweise ein Kationensalz der Gruppe I oder II des Periodensystems der Elemente ist.

9. Verwendung nach Anspruch 5, **dadurch gekennzeichnet, dass** die organische Polysäure der Formel COOH-(CH₂)ₙ-COOH, oder n eine ganze Zahl zwischen 0 und einschließlich 7 ist, oder ein Mono- oder Dialkalisalz der organischen Polysäure der Formel COOH-(CH₂)ₙ-COOH ist, oder n ist eine ganze Zahl mit einem Wert zwischen 0 und einschließlich 7 oder eine polymere organische Polysäure eines oder mehrerer der folgenden Monomere, in saurer Form oder teilweise oder vollständig neutralisiert mit einem oder mehreren Kationen der Gruppe I oder II des Periodensystems der Elemente: Acryl, Methacryl, Maleinsäure oder Itacon und ist vorzugsweise Oxalsäure, Pimelinsäure oder Adipinsäure.

10. Verwendung nach Anspruch 5, **dadurch gekennzeichnet, dass** das Alkanolamin ausgewählt ist aus 2-Amino-2-Methyl-1-Propanol, 2-Amino-2-Ethyl-1,3-Propandiol, TriEthanolamin, N-Butyldiethanolamin und Tri-Iso-Propanolamin, neutralisiert oder nicht, und vorzugsweise ausgewählt ist aus ihren Formen, die mittels eines Ameisen- oder Zitronensäuresalzes oder eines organischen Polysäuresalzes neutralisiert sind.

11. Verwendung nach Anspruch 5, **dadurch gekennzeichnet, dass** das Polyalkylenglykolpolymer ein Polyethylenglykol, Polypropylenglykol oder Ethylen-Propylenglykol-Copolymer ist, statistisch oder blockartig.

12. Verwendung nach Anspruch 5, **dadurch gekennzeichnet, dass** das Kohlenhydrat mit einer durchschnittlichen quadratischen Wurzel des Trägheitsradius des Kohlenhydrats, die gleich oder kleiner als der Modalradius des Mineralmaterials ist, Glucose, Fructose, Saccharose, Stärke oder Cellulose und vorzugsweise Saccharose ist.

13. Verwendung nach Anspruch 5, **dadurch gekennzeichnet, dass** das Polyglycerin oder die Polyglycerine ausgewählt sind aus Diglycerin, Triglycerin, Tetraglycerin, Pentaglycerin, Hexaglycerin, Heptaglycerin, Octaglycerin, Nonaglycerin und Decaglycerin und Mischungen davon und vorzugsweise aus Di- und Triglycerin.

14. Verwendung nach einem der Ansprüche 5 bis 13, **dadurch gekennzeichnet, dass** die Formulierungen von 20 bis 95 Gew.- % Glycerin, von 1 bis 50 Gew.- % des Mittels und von 0 bis 65 Gew.- % Wasser, vorzugsweise von 30 bis 90 Gew.- % Glycerin, enthalten, von 10 bis 45 Gew.- % des Mittels und von 0 bis 60 Gew.- % Wasser, sehr bevorzugt von 35 bis 75 Gew.- % Glycerin, von 30 bis 40 Gew.- % des Mittels und von 5 bis 50 Gew.- % Wasser, bezogen auf ihr Gesamtgewicht, wobei die Summe der Gewichtsprozente des Glycerins, des Mittels und des Wassers in jedem Fall gleich 100 % beträgt.

15. Verwendung nach Anspruch 1, **dadurch gekennzeichnet, dass** die Formulierungen ein oder mehrere Polyglycerine in Abwesenheit von Glycerin umfassen.

16. Verwendung nach Anspruch 15, **dadurch gekennzeichnet, dass** das Polyglycerin oder die Polyglycerine ausgewählt sind aus Diglycerin, Triglycerin, Tetraglycerin, Pentaglycerin, Hexaglycerin, Heptaglycerin, Octaglycerin, Nonaglycerin und Decaglycerin und Mischungen davon und vorzugsweise aus Di- und Triglycerin.

17. Verwendung nach Anspruch 15 oder 16, **dadurch gekennzeichnet, dass** die Formulierungen aus einem oder mehreren Polyglycerinen in reiner Form bestehen.

18. Verwendung nach Anspruch 15 oder 16, **dadurch gekennzeichnet, dass** die Formulierungen aus Wasser und einem oder mehreren Polyglycerinen bestehen.

19. Verwendung nach Anspruch 18, **dadurch gekennzeichnet, dass** die Formulierungen von 25 % bis 95 %, vorzugsweise von 45 % bis 90 %, sehr bevorzugt von 75 % bis 85 %, bezogen auf ihr Gesamtgewicht, Polyglycerine enthalten, wobei der Rest aus Wasser besteht.

20. Verwendung nach einem der Ansprüche 1 bis 19, **dadurch gekennzeichnet, dass** 500 bis 3.000 ppm Glycerin oder Polyglycerin, bezogen auf das Trockengewicht des Mineralmaterials, umgesetzt werden.

21. Verwendung nach einem der Ansprüche 1 bis 20, **dadurch gekennzeichnet, dass** zwischen 0,1 und 1 mg, vorzugsweise zwischen 0,2 und 0,6 mg, Gesamttrockenäquivalent des Glycerins oder Polyglycerins und jedes mögliche Mittel pro m² des Mineralmaterials umgesetzt werden.

22. Verwendung nach einem der Ansprüche 1 bis 21, **dadurch gekennzeichnet, dass** das Mineralmaterial auf einen durchschnittlichen Durchmesser, gemessen mit einem Sedigraph™ 5100, zwischen 0,5 und 10 µm, vorzugsweise zwischen 1 µm und 5 µm gemahlen ist.

23. Verwendung nach einem der Ansprüche 1 bis 22, **dadurch gekennzeichnet, dass** das Mineralmaterial gemahlen wird, um einen Gewichtsprozentsatz von Partikeln mit einem Durchmesser von weniger als 2 µm, gemessen durch eine Sedigraph™ 5100, im Bereich von 20 % bis 90 %, vorzugsweise von 30 % bis 60 %, zu erhalten.

24. Verwendung nach einem der Ansprüche 1 bis 23, **dadurch gekennzeichnet, dass** das Mineralmaterial ein natürliches Calciumcarbonat ist.

## Claims

1. Use, as an agent improving the self-dispersing properties in water of a mineral material selected from dolomite, talcum, titanium dioxide, alumina, kaolin and calcium carbonate, with formulations **characterised in that** they:
i. consist of glycerol, in an aqueous or pure form, or
ii. consist of glycerol with one or several of the following agents: ethylene glycol, mono propylene glycol, triethylene glycol, an inorganic acid or an inorganic acid salt, formic or citric acid, an organic polyacid or an organic polyacid salt, an alkanolamine, a polyethylenimine, a polyalkylene glycol polymer with a molecular mass ranging from 200g/mole to 20000g/mole, preferably from 600g/mole to 6000g/mole, a carbohydrate with a root mean square radius of gyration that is equal or inferior to the modal radius of the mineral material, one or several polyglycerols, said agent or agents being in an aqueous or pure form, or
iii. comprise one or several polyglycerols in the absence of glycerol, and **in that** they are implemented during at least one step of dry milling of said mineral material,
and **in that** 100ppm to 5000ppm of glycerol or polyglycerol are implemented, with respect to the dry weight of said mineral material.

2. Use according to claim 1, **characterised in that** said formulations consist of glycerol in a pure form.

3. Use according to claim 1, **characterised in that** said formulations consist of water and glycerol.

4. Use according to claim 3, **characterised in that** said formulations comprise from 25% to 95%, preferably from 45% to 90%, and more preferably from 75% to 85% by weight of glycerol with respect to their total weight, the complement being water.

5. Use according to claim 1, **characterised in that** said formulations consist of glycerol with one or several agents, in an aqueous or pure form.

6. Use according to claim 5, **characterised in that** said inorganic acid is a phosphoric acid.

7. Use according to claim 5, **characterised in that** said inorganic acid salt is a mono-, di- or tri-alkali salt, and is preferably a cation salt of Group I or II of the Periodic Table of Elements.

8. Use according to claim 5, **characterised in that** said formic or citric acid salt is a mono-, di- or tri-alkali salt, and is preferably a cation salt of Group I or II of the Periodic Table of Elements.

9. Use according to claim 5, **characterised in that** said organic polyacid is of formula COOH-(CH₂)ₙ-COOH, where n is a natural number ranging from 0 to 7, included, or is a mono- or di-alkali salt of the organic polyacid of formula COOH-(CH₂)ₙ-COOH, where n is equal to a natural number ranging from 0 to 7 included, or is a polymeric organic polyacid from one or several of the following monomers, in a partially or fully neutralised acid form, with one or several cations of Group I or II of the Periodic Table of Elements: acrylic, methacrylic, maleic or itaconic acid, and preferably is an oxalic acid, a pimelic acid or an adipic acid.

10. Use according to claim 5, **characterised in that** said alkanolamine is selected from 2-amino-2-methyl-1-propanol, 2-amino-2-ethyl-1,3-propanediol, triethanolamine, N-butyldiethanolamine and tri-iso-propanolamine, neutralised or not, and preferably selected from their forms neutralised by a formic or citric acid salt, or an organic polyacid salt.

11. Use according to claim 5, **characterised in that** said polyalkylene glycol polymer is a polyethylene glycol, a polypropylene glycol, or an ethylene-propylene glycol polymer, random or in blocks.

12. Use according to claim 5, **characterised in that** said carbohydrate with a root mean square radius of gyration of said carbohydrate equal or inferior to the modal radius of the mineral material is glucose, fructose, sucrose, starch or cellulose, and preferably sucrose.

13. Use according to claim 5, **characterised in that** the polyglycerol or polyglycerols are selected from diglycerol, triglycerol, tetraglycerol, pentaglycerol, hexaglycerol, heptaglycerol, octaglycerol, nonaglycerol and decaglycerol or mixtures thereof, and preferably from diglycerol and triglycerol.

14. Use according to one of the claims 5 to 13, **characterised in that** said formulations contain from 20% to 95% by weight of glycerol, from 1% to 50% by weight of said agent and from 0% to 65% by weight of water, preferably from 30% to 90% by weight of glycerol, from 10% to 45% by weight of said agent, and from 0% to 60% by weight of water, and more preferably from 35% to 75% by weight of glycerol, from 30% to 40% by weight of said agent, and from 5% to 50% by weight of water with respect to their total weight, the sum of the weight percentages of the glycerol, said agent and water always being equal to 100%.

15. Use according to claim 1, **characterised in that** said formulations comprise one or several polyglycerols in the absence of glycerol.

16. Use according to claim 15, **characterised in that** the polyglycerol or polyglycerols are selected from diglycerol, triglycerol, tetraglycerol, pentaglycerol, hexaglycerol, heptaglycerol, octaglycerol, nonaglycerol and decaglycerol or mixtures thereof, and preferably from diglycerol and triglycerol.

17. Use according to claim 15 or 16, **characterised in that** said formulations consist of one or several polyglycerols in a pure form.

18. Use according to claim 15 or 16, **characterised in that** said formulations consist of water and one or several polyglycerols.

19. Use according to claim 18, **characterised in that** said formulations comprise from 25% to 95%, preferably from 45% to 90%, and more preferably from 75% to 85% by weight of polyglycerols with respect to their total weight, the complement being water.

20. Use according to one of the claims 1 to 19, **characterised in that** glycerol or polyglycerol is implemented at 500 to 3000ppm, with respect to the dry weight of said mineral material.

21. Use according to one of the claims 1 to 20, **characterised in that** 0.1 to 1mg, and preferably from 0.2 to 0.6mg is implemented, in total dry equivalent of said glycerol or polyglycerol and any agent, per m² of mineral material.

22. Use according to one of the claims 1 to 21, **characterised in that** said mineral material is milled to a mean diameter, measured by a Sedigraph™ 5100, ranging from 0.5 to 10µm, preferably from 1 µm to 5 µm.

23. Use according to one of the claims 1 to 22, **characterised in that** said mineral material is milled to obtain a percentage of weight of particles with a diameter inferior to 2µm, measured by a Sedigraph™ 5100, ranging from 20% to 90%, preferably from 30% to 60%.

24. Use according to one of the claims 1 to 23, **characterised in that** said mineral material is a natural calcium carbonate.
